# EUROPEAN PATENT APPLICATION

(11) **EP 4 586 532 A1**
(43) Date of publication of application: **16.07.2025**
(21) Application number: 23862430.8
(22) Date of filing: 06.09.2023
(51) Int. Cl.: H04L 5/00, H04W 72/20

(54) **RESOURCE BLOCK SET DETERMINATION METHOD, COMMUNICATION NODE, AND STORAGE MEDIUM**

(30) Priority: 08.09.2022 CN 202211097856
(71) Applicant: ZTE Corporation, Shenzhen, Guangdong 518057 (CN)
(72) Inventor: MIAO, Ting, Shenzhen, Guangdong 518057 (CN); BI, Feng, Shenzhen, Guangdong 518057 (CN); XING, Weimin, Shenzhen, Guangdong 518057 (CN); LU, Youxiong, Shenzhen, Guangdong 518057 (CN)
(74) Representative: Aipex B.V.
(86) International application number: PCT/CN2023/117234
(87) International publication number: WO 2024/051736

(57) **Abstract**

Provided are a resource block set, RB set, determination method, a communication node, and a storage medium. The RB set determination method includes: determining resource configuration information, where the resource configuration information includes at least one of the position of a reference resource block, RB, or the position of at least one carrier; determining a start frequency position according to the resource configuration information; and determining an RB set according to the start frequency position.

## Description

### TECHNICAL FIELD

The present application relates to the field of communications, for example, a resource block set (RB set) determination method, a communication node, and a storage medium.

### BACKGROUND

The Integrated Access and Backhaul Node (IAB Node) includes two types of logical entities: a mobile terminal (MT) and a Distributed Unit (DU). The IAB node accesses the parent node (such as the IAB node or the IAB donor node) through the MT (or IAB-MT) to achieve wireless backhaul, and the DU (also referred to as the IAB-DU) provides services for the child node or the user equipment (UE). The MT and DU may transmit data in a time-division multiplexing manner or transmit data simultaneously in a non-time-division multiplexing (such as frequency-division multiplexing or space-division multiplexing) manner, thereby reducing the communication delay and improving the communication efficiency. In a non-time-division multiplexing scenario, the centralized unit (CU) (or IAB-donor-CU) usually configures multiple RB sets for the IAB-DU cell in the frequency domain and configures the resource attributes of the RB sets in each symbol direction of the slot, and based on the resource attributes, the DU determines whether the resources can be used, thereby avoiding conflicts with the resources used by the MT. However, one IAB-DU cell is usually configured with at least one carrier, so determining the RB set based on which carrier or which reference frequency of the IAB-DU cell is a problem to be solved urgently.

### SUMMARY

An embodiment of the present application provides an RB set determination method. The method includes the following:
Resource configuration information is determined, where the resource configuration information includes at least one of the position of a reference resource block (RB) or the position of at least one carrier; a start frequency position is determined according to the resource configuration information; and an RB set is determined according to the start frequency position.

An embodiment of the present application provides a communication node. The communication node includes a processor configured to perform the RB set determination method of any previous embodiment when executing a computer program.

An embodiment of the present application provides a computer-readable storage medium storing a computer program which, when executed by a processor, causes the processor to perform the RB set determination method of any previous embodiment.

### BRIEF DESCRIPTION OF DRAWINGS

FIG. 1 is a networking diagram of a wireless communication system capable of implementing an IAB function according to an embodiment.
FIG. 2 is a flowchart of an RB set determination method according to an embodiment.
FIG. 3 is a schematic diagram of determining a start frequency position according to an embodiment.
FIG. 4 is another schematic diagram of determining a start frequency position according to an embodiment.
FIG. 5 is another schematic diagram of determining a start frequency position according to an embodiment.
FIG. 6 is a schematic diagram of determining an RB set according to an embodiment.
FIG. 7 is another schematic diagram of determining an RB set according to an embodiment.
FIG. 8 is a diagram illustrating the structure of an RB set determination apparatus according to an embodiment.
FIG. 9 is a diagram illustrating the structure of an IAB node according to an embodiment.

### DETAILED DESCRIPTION

The embodiments described herein are intended to explain the present application. Embodiments of the present application are described hereinafter in conjunction with drawings.

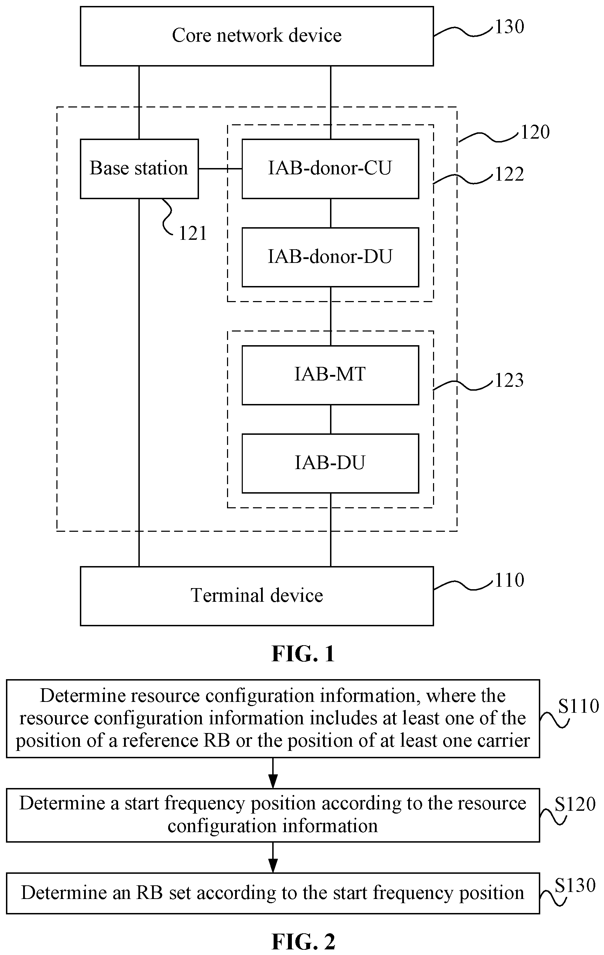

The RB set determination method of the present application may be applied to various wireless communication systems, for example, a long-term evolution (LTE) system, a 4th-generation (4G) system, a 5th-generation (5G) system, an LTE-5G hybrid architecture system, a 5G New Radio (NR) system, and a new communication system such as a 6th-generation (6G) system in future communications. FIG. 1 is a networking diagram of a wireless communication system capable of implementing an IAB function according to an embodiment. As shown in FIG. 1, the wireless communication system includes a terminal device 110, an access network device 120, and a core network device 130.

The terminal device 110 may be a wireless transceiving device that may be deployed on land (for example, indoor or outdoor, handheld, worn, or in-vehicle), deployed on the water surface (such as a ship), or deployed in the air (for example, aircraft, balloon, or satellite). The terminal device 110 may be, for example, a user equipment (UE), a mobile phone, a mobile station, a tablet computer, a notebook computer, an ultra-mobile personal computer (UMPC), a handheld computer, a netbook, a personal digital assistant (PDA), another user equipment connectable to a network, a virtual reality (VR) terminal, an augmented reality (AR) terminal, a wireless terminal in industrial control, a wireless terminal in self-driving, a wireless terminal in remote medicine, a wireless terminal in a smart grid, a wireless terminal in transportation safety, a wireless terminal in a smart city, a wireless terminal in a smart home, an IoT node in the Internet of Things, a vehicle-mounted communication apparatus in vehicle-to-everything, an entertainment or gaming device or system, or a global positioning system (GPS) device. Embodiments of the present application do not limit technologies and forms used by the terminal device 110. The terminal device 110 may be referred to as a terminal.

The access network device 120 is an access device for the terminal device 110 to access the wireless communication system in a wireless manner and may include a base station 121, an IAB donor node 122, and an IAB node 123. The base station 121 may be a traditional base station, an evolved NodeB (eNB or eNodeB) in long-term evolution advanced (LTEA), a transmission reception point (TRP), a base station or next-generation NodeB (gNB) in a 5G mobile communication system, a base station in a future mobile communication system, or an access node in a Wireless Fidelity (Wi-Fi) system. The IAB donor node 122 is connected to the core network device 130 to provide a wireless backhaul function for the IAB node 123. The IAB donor node 122 may also be connected to the base station 121. The IAB donor node 122 includes an IAB-donor-CU and at least one IAB-donor-DU. The IAB node 123 includes an IAB-MT and an IAB-DU. The IAB node 123 accesses the IAB donor node 122 through the IAB-MT to achieve wireless backhaul, and the IAB node 123 provides services for the child node (such as the downstream IAB node) or the terminal device 110 through the IAB-DU.

The core network device 130 may be an access and mobility management network element or a session management network element. For example, the terminal device 110 may access the core network through the access network device 120 to perform data transmission.

In the embodiment of the present application, an RB set determination method, a communication node, and a storage medium that can be run in the preceding wireless communication system are provided so that an RB set can be determined based on resource configuration information, thereby avoiding resource conflicts and improving communication efficiency.

The RB set determination method, the communication node, and the technical effects are described below. In the present application, the communication node includes the IAB node, the IAB donor node, or a relay node. In the following embodiment, the case where the communication node is the IAB node and the DU cell of the IAB node is a time-division duplexing (TDD) cell is used as an example to describe a method for determining an RB set of the DU cell of the IAB node. When the DU cell of the IAB node is a frequency-division duplexing (FDD) cell, the method for determining the RB set of the TDD cell may be applied to the downlink and uplink of the FDD cell separately. Of course, the solution provided in the present application is also applicable to other nodes, for example, any type of wireless communication device such as the relay node or the base station. The corresponding solution can be obtained by simply replacing the IAB node with the corresponding device, replacing the MT with the terminal entity of the device, and replacing the DU with the base station entity of the device.

FIG. 2 is a flowchart of an RB set determination method according to an embodiment. As shown in FIG. 2, the method provided in this embodiment is applicable to a communication node. The method includes S110, S120, and S130.

In S110, resource configuration information is determined, where the resource configuration information includes at least one of the position of a reference RB or the position of at least one carrier.

In S120, a start frequency position is determined according to the resource configuration information.

According to S110, the resource configuration information may be specifically divided into three cases: the first case is that the resource configuration information includes the position of the reference RB; the second case is that the resource configuration information includes the position of at least one carrier; and the third case is that the resource configuration information includes the position of the reference RB and the position of at least one carrier. Correspondingly, in S120, no matter which case the resource configuration information belongs to, the start frequency position can be determined.

The method of "determining the start frequency position according to the resource configuration information" in S120 may be implemented in three example embodiments below. The following example embodiments may be performed individually or in combination.

In a first example embodiment, the resource configuration information includes the position of at least one carrier. That is, the DU cell is configured with at least one carrier, and the communication node determines the lowest frequency position of the at least one carrier according to the position of the at least one carrier and uses the position of a Common Resource Block (CRB) overlapping the lowest frequency position of the at least one carrier as the start frequency position, or uses the position of the lowest subcarrier of the CRB overlapping the lowest frequency position of the at least one carrier as the start frequency position, or uses the position of a CRB with the minimum index overlapping the lowest frequency position of the at least one carrier as the start frequency position, or uses the position of the lowest subcarrier of the CRB with the minimum index overlapping the lowest frequency position of the at least one carrier as the start frequency position.

In this example embodiment, the lowest frequency position of the at least one carrier is the lowest frequency position of the union of the at least one carrier (which may also be understood as the position of the lowest of the lowest frequencies of carriers in the at least one carrier), or the position of a start RB of a carrier with the lowest start frequency among the at least one carrier, or the position of the lowest subcarrier of the start RB of the carrier with the lowest start frequency among the at least one carrier.

The lowest frequency position of the carrier may be the position of the start RB of the carrier or the position of the lowest subcarrier of the start RB of the carrier.

In this example embodiment, the subcarrier spacing (SCS) corresponding to the CRB is the SCS corresponding to the RB set (that is, the CRB and the RB set correspond to the same SCS), or the maximum value of the SCSs of carriers in the at least one carrier, or the SCS configured by the CU, or the predefined SCS.

In the present application, the SCS corresponding to the CRB may also be understood as the SCS of the CRB or the SCS used by common resources. The SCS corresponding to the RB set is indicated by the SCS in the RB set configuration parameter. The SCS corresponding to the RB set may be understood as the reference SCS for the RB set configuration or the SCS adopted by the RB set.

In an embodiment, the position of the at least one carrier is generally provided by a transmission bandwidth or a carrier list. The configuration parameter corresponding to the transmission bandwidth includes at least one of the following: the SCS or the number of RBs included in the carrier. The configuration parameter of each carrier in the carrier list includes at least one of the following: the SCS of the carrier, the frequency offset between the lowest frequency of the carrier and the common reference point (that is, point A, which is also the lowest subcarrier of CRB 0), or the number of RBs included in the carrier. For the carrier provided by the transmission bandwidth, it may be understood that the central subcarrier of the carrier is aligned with the common reference point or the lowest subcarrier of the carrier is aligned with the common reference point.

The CRBs are numbered in ascending order starting from 0 in the frequency domain. CRB 0 is the reference RB. The lowest subcarrier or the center of the lowest subcarrier of CRB 0 is also referred to as the common reference point, that is, point A. The lowest subcarrier or the center of the lowest subcarrier of CRB 0 with any SCS coincides with point A. The position of the reference RB is usually indicated by an absolute radio-frequency channel number (ARFCN) or a channel raster. It may also be understood as that the ARFCN or channel raster is used for indicating the position of point A, or an absolute frequency position, or the position of CRB 0, or the position of the lowest subcarrier of CRB 0.

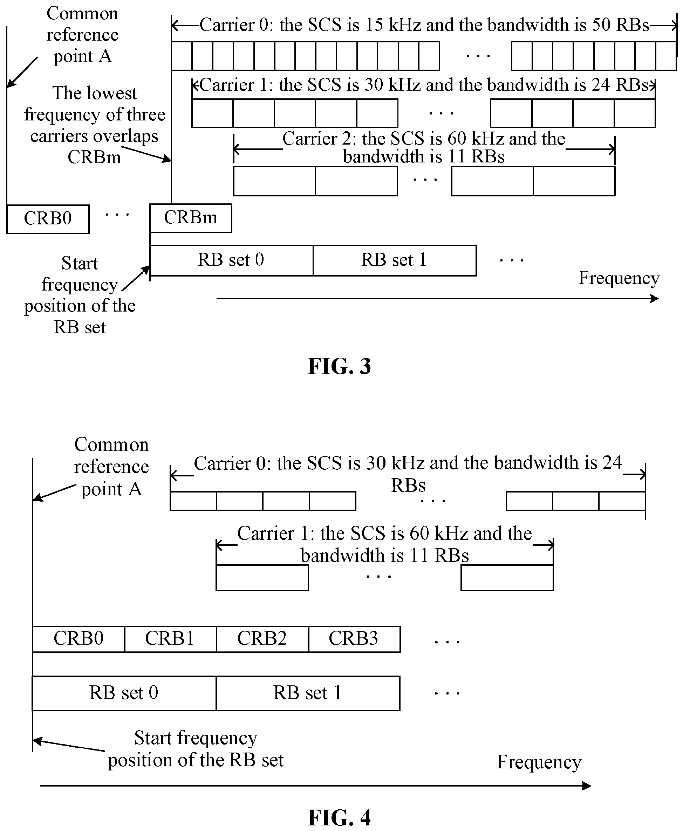

For example, FIG. 3 is a schematic diagram of determining a start frequency position according to an embodiment. As shown in FIG. 3, the DU cell is configured with three carriers. For each carrier, one square represents one RB, and squares of different lengths represent RBs with different SCSs. The SCS corresponding to carrier 0 is 15 kHz and the bandwidth is 50 RBs. The SCS corresponding to carrier 1 is 30 kHz and the bandwidth is 24 RBs. The SCS corresponding to carrier 2 is 60 kHz and the bandwidth is 11 RBs. The lowest frequency position of the three carriers is the position of the start RB of carrier 0, that is, the lowest frequency of carrier 0 is the lowest among the lowest frequency of carrier 0, the lowest frequency of carrier 1, and the lowest frequency of carrier 2. The SCS corresponding to the CRB is 60 kHz, the lowest subcarrier of CRBO overlaps point A, and CRBm is the CRB overlapping the lowest frequency position of the three carriers or the CRB with the minimum index overlapping the lowest frequency position of the three carriers. Therefore, it can be determined that the start frequency position is CRBm or the position of the lowest subcarrier of CRBm, that is, the start position of RB set 0 starts from CRBm.

In a second example embodiment, the resource configuration information includes the position of the reference RB. That is, the DU cell is configured with the position of the reference RB, and the communication node uses the position of the reference RB as the start frequency position or uses the position of the lowest subcarrier of the reference RB as the start frequency position.

For example, FIG. 4 is another schematic diagram of determining a start frequency position according to an embodiment. As shown in FIG. 4, the DU cell is configured with the position of CRB 0, that is, the position of the reference RB. The lowest subcarrier of CRBO coincides with the common reference point, and two carriers are configured. The SCS corresponding to carrier 0 is 30 kHz and the bandwidth is 24 RBs. The SCS corresponding to carrier 1 is 60 kHz and the bandwidth is 11 RBs. Therefore, the start frequency position may be determined to be the position of CRBO or the position of the lowest subcarrier of CRB 0.

The SCS of the CRB is the same as the SCS corresponding to the RB set or is the same as the SCS corresponding to the carrier with the maximum SCS among the at least one carrier configured in the DU cell. In FIG. 4, the SCS of the CRB and the SCS of carrier 1 are the same, that is, 60 kHz.

In a third example embodiment, the resource configuration information includes the position of at least one carrier. That is, the DU cell is configured with at least one carrier, and the communication node determines the target frequency position according to the position of the at least one carrier and uses the target frequency position as the start frequency position.

In this example embodiment, the target frequency position is the lowest frequency position of the at least one carrier, or the lowest frequency position of a carrier with the maximum SCS among the at least one carrier, or the lowest frequency position of a carrier with the maximum bandwidth among the at least one carrier, or the lowest frequency position of a carrier with the same SCS as an SCS corresponding to the RB set among the at least one carrier.

The lowest frequency position of the at least one carrier may be understood as the lowest frequency position of the union of the at least one carrier (which may also be understood as the position of the lowest of the lowest frequencies of carriers in the at least one carrier), or the position of a start RB of a carrier with the lowest start frequency among the at least one carrier, or the position of the lowest subcarrier of the start RB of the carrier with the lowest start frequency among the at least one carrier.

The lowest frequency position of the carrier with the maximum SCS among the at least one carrier may be understood as the position of a start RB of the carrier with the maximum SCS among the at least one carrier or the position of the lowest subcarrier of the start RB of the carrier with the maximum SCS among the at least one carrier.

The lowest frequency position of the carrier with the maximum bandwidth among the at least one carrier may be understood as the position of a start RB of the carrier with the maximum bandwidth among the at least one carrier or the position of the lowest subcarrier of the start RB of the carrier with the maximum bandwidth among the at least one carrier.

The lowest frequency position of the carrier with the same SCS as the SCS corresponding to the RB set among the at least one carrier may be understood as the position of a start RB of the carrier with the same SCS as the SCS corresponding to the RB set among the at least one carrier or the position of the lowest subcarrier of the start RB of the carrier with the same SCS as the SCS corresponding to the RB set among the at least one carrier.

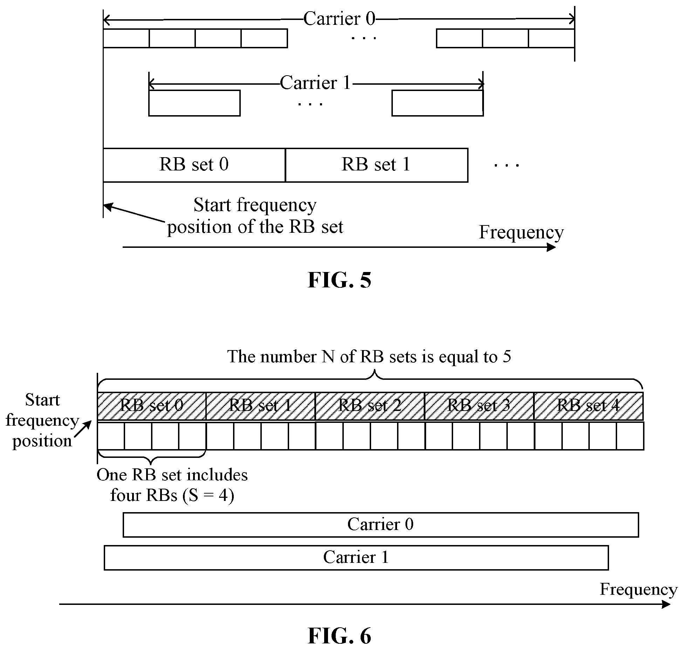

For example, FIG. 5 is another schematic diagram of determining a start frequency position according to an embodiment. As shown in FIG. 5, the DU cell is configured with two carriers, and the start frequency of carrier 0 is lower than the start frequency of carrier 1. Then, the start frequency position is the lowest frequency position of the two carriers, that is, the start frequency position is the position of the start RB of carrier 0.

In S 130, an RB set is determined according to the start frequency position.

In an embodiment, N RB sets are continuous and non-overlapping in the frequency domain, the start position of the first RB set starts from the start frequency position, each RB set includes S RBs, and the SCS corresponding to the RB set is X. N, S, and X are determined according to the number of RB sets in the RB set configuration parameter, the number of RBs included in one RB set, and the SCS, respectively.

The start position of the first RB set may be understood as the start RB of the first RB set, or the lowest subcarrier of the start RB of the first RB set, or the boundary of the first RB set. The start frequency position may be understood as the position of an RB, or the position of the lowest subcarrier of an RB, or an absolute frequency position. That is, the start frequency position corresponds to an RB, or the lowest subcarrier of an RB, or the absolute frequency position. For the method for determining the start frequency position, reference may be made to the preceding detailed description of S 120.

For example, FIG. 6 is a schematic diagram of determining an RB set according to an embodiment. As shown in FIG. 6, the number of RB sets configured in the DU cell is five (that is, N = 5), each RB set includes four RBs (that is, S = 4), and the SCS corresponding to the RB set is 60 kHz (that is, X = 60 kHz). According to the RB set configuration, the RB set to which each RB of each carrier of the DU cell belongs can be determined.

In an embodiment, at least one RB set is continuous and non-overlapping, and the start position of the first RB set starts from the start frequency position. The number of RB sets, the number of RBs included in the RB set, and the SCSs corresponding to the RB sets are indicated by a higher-level entity, for example, by the CU.

In an embodiment, that the start position of the first RB set starts from the start frequency position includes one of the following: the start RB of the first RB set starts from the RB corresponding to the start frequency position, the lowest subcarrier of the start RB of the first RB set starts from the lowest subcarrier of the RB corresponding to the start frequency position, or the lowest subcarrier of the start RB of the first RB set starts from the absolute frequency position corresponding to the start frequency position.

In an embodiment, if all the RB sets do not cover the entire carrier, the remaining RBs or remaining frequency resources are included in a designated RB set. For example, the designated RB set is the first RB set, the last RB set, or an RB set indicated by the CU. The remaining RBs or remaining frequency resources may be understood as resources that are not covered by the RB sets determined by the start frequency position and the RB set configuration parameter.

In an embodiment, the entire carrier includes at least one of the following: a carrier formed by a union of the at least one carrier; a carrier of the at least one carrier; a carrier with the minimum bandwidth of a union including the at least one carrier; or a carrier with the position of the reference RB as a start position and the highest frequency of a union of the at least one carrier as an end position.

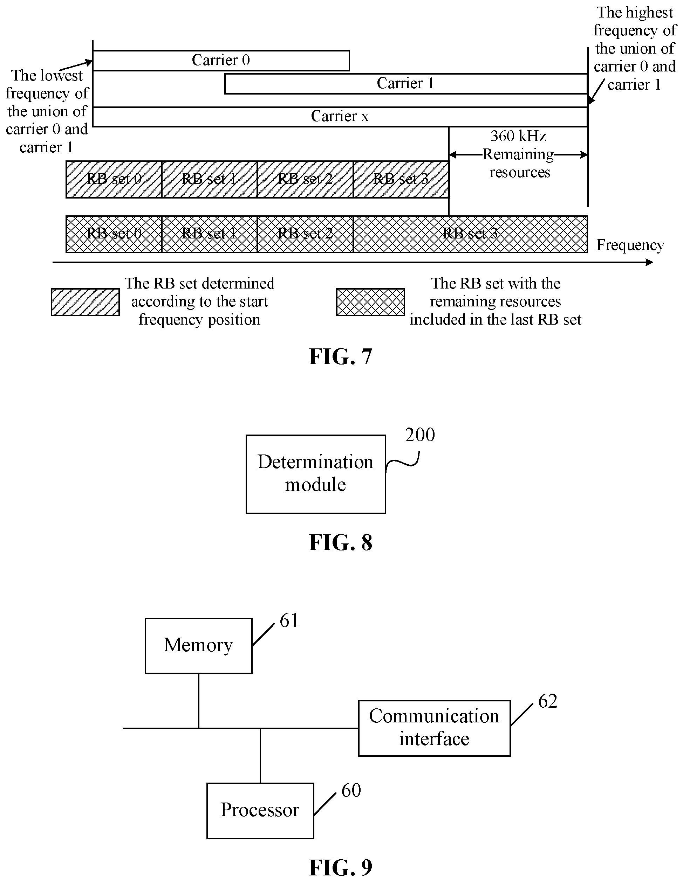

If the entire carrier includes the carrier formed by the union of the at least one carrier configured in the DU cell, the carrier formed by the union of the at least one carrier may be understood as a frequency resource corresponding to the union of the at least one carrier. For example, FIG. 7 is another schematic diagram of determining an RB set according to an embodiment. As shown in FIG. 7, the DU cell is configured with two carriers: carrier 0 and carrier 1. It is assumed that carrier x is the union of the two carriers, that is, the frequency resource in carrier x belongs to at least one of carrier 0 or carrier 1. According to the preceding embodiment, four RB sets of the DU cell are determined. These four RB sets do not cover the last 360 kHz frequency resources of carrier x (that is, two RBs with an SCS of 15 kHz). Then, the last 360 kHz frequency resources of carrier x belong to the last RB set, that is, RB set 3. That is, the fourth RB set includes the last 360 kHz frequency resources of carrier x.

If the entire carrier includes the carrier of the at least one carrier configured in the DU cell, it may be understood that the entire carrier includes all the carriers configured in the DU cell, and the resources in each carrier that are not covered by the RB sets determined by the start frequency position and the RB set configuration parameter are all included in the last RB set. For example, the DU cell is configured with two carriers: carrier 0 and carrier 1. According to the preceding embodiment, four RB sets of the DU cell are determined. If these four RB sets do not cover the last two RBs of carrier 0, the last two RBs of carrier 0 belong to the last RB set. Similarly, if these four RB sets do not cover the last three RBs of carrier 1, then the last three RBs of carrier 1 belong to the last RB set.

If the entire carrier includes the carrier with the minimum bandwidth of the union of the at least one carrier configured in the DU cell, the SCS of the carrier with the minimum bandwidth may be an SCS indicated by the CU or an SCS of a specific carrier among the at least one carrier configured in the DU cell. For example, the specific carrier may be a carrier with the minimum SCS among the at least one carrier, or a carrier with the maximum SCS among the at least one carrier, or a carrier designated by the CU among the at least one carrier. For example, assuming that the RB sets determined according to the start frequency position and the RB set configuration parameter do not cover the last two RBs of the carrier with the minimum bandwidth, then the last two RBs belong to the last RB set. For another example, assuming that the RB sets determined according to the start frequency position and the RB set configuration parameter do not cover the last 180 kHz frequency resources of the carrier with the minimum bandwidth, then the last 180 kHz frequency resources belong to the last RB set.

If the entire carrier includes the carrier with the position of the reference RB as the start position and the highest frequency of the union of the at least one carrier as the end position, the carrier with the position of the reference RB as the start position and the highest frequency of the union of the at least one carrier as the end position may be understood as a frequency resource with the position of the reference RB as the start position and the highest frequency of the union of the at least one carrier as the end position. For example, assuming that the RB sets determined based on the start frequency position and the RB set configuration parameter do not cover the carrier determined by the start position and the end position, then the uncovered frequency resources belong to the last RB set.

In an embodiment, the entire carrier may be a carrier with the target frequency position as the start frequency position among the at least one carrier. For example, if the target frequency position is the lowest frequency position of the carrier with the maximum SCS among the at least one carrier, the entire carrier is the carrier with the maximum SCS among the at least one carrier. Assuming that the RB sets determined according to the start frequency position do not cover this carrier, then the resources not covered in this carrier belong to the last RB set.

In an embodiment, the resource configuration information corresponds to a given direction in a cell; the cell includes at least one of the following: a DU cell of a communication node, a DU cell of a child node of the communication node, a cell for which the communication node provides a service, or a cell for which the child node of the communication node provides a service; and the given direction includes at least one of the following: the uplink of an FDD cell, the downlink of the FDD cell, the uplink and the downlink of a TDD cell, or a supplementary uplink carrier.

In an embodiment, the CU provides the RB set configuration of the DU cell for the DU of the IAB node. The RB set configuration parameter includes at least one of the following: the SCS, the number of RBs included in one RB set, or the number of RB sets. The IAB node determines the RB set of the DU cell of the IAB node according to the frequency configuration information and RB set configuration parameter of the DU cell; or the IAB node determines the RB set of the DU cell of the IAB node according to the reference frequency configured for the RB set of the DU cell of the IAB node and the RB set configuration parameter, at least one RB set is continuous and non-overlapping in the frequency domain, and the start RB of the first RB set starts from the reference frequency configured for the RB set, where the reference frequency configured for the RB set of the DU cell of the IAB node is provided for the DU of the IAB node by the CU.

If one IAB node has a child node (the child node of the IAB node is also an IAB node), the CU further provides the IAB node with the frequency configuration information and RB set configuration of the DU cell of the child node of the IAB node. The RB set configuration parameter includes at least one of the following: the SCS, the number of RBs included in one RB set, or the number of RB sets. The IAB node determines the RB set of the DU cell of the child node according to the frequency configuration information and RB set configuration parameter of the DU cell of the child node; or the IAB node determines the RB set of the DU cell of the child node according to the reference frequency configured for the RB set of the DU cell of the child node and the RB set configuration parameter, where the reference frequency configured for the RB set of the DU cell of the child node is provided for the DU of the IAB node by the CU. Generally, the DU of the IAB node reports the frequency configuration information of the cell to the CU. Therefore, the CU knows the frequency configuration information of the DU cell of the IAB node. The DU of the child node of the IAB node reports the frequency configuration information of the cell to the CU. Therefore, the CU knows the frequency configuration information of the DU cell of the child node of the IAB node. However, the IAB node does not know the frequency configuration information of the DU cell of the child node. Therefore, when the CU provides the IAB node with the RB set configuration of the DU cell of the child node of the IAB node, the frequency configuration information of the DU cell of the child node of the IAB node needs to be provided.

The frequency configuration information includes at least one of the following: frequency information or the position of the at least one carrier.

The configuration parameter corresponding to the frequency information includes at least one of the following: the position of the reference RB, supplementary uplink carrier information, at least one operating frequency band, or whether the frequency is offset by 7.5 kHz.

The manner of indicating the position of the reference RB and the manner of providing the position of the at least one carrier are the same as those in the preceding embodiments, and the details are not repeated here.

Each given direction of the DU cell of the IAB node has corresponding frequency configuration information, and the given direction includes at least one of the following: the uplink of the FDD cell, the downlink of the FDD cell, the uplink and the downlink of the TDD cell, or the supplementary uplink carrier.

For a given direction of the DU cell, that the RB set is determined according to the frequency configuration information and the RB set configuration parameter specifically includes: determining the RB set according to the RB set configuration parameter and the position of the reference RB or the position of the at least one carrier configured in the given direction of the DU cell. For the specific method, reference is made to the preceding embodiments, and the details are not repeated here. Generally, the parameters included in the resource configuration information are part of the parameters in the frequency configuration information, so the preceding embodiments may also be understood as the following: determining the RB set of the cell according to the position of the reference RB in the frequency configuration information of the cell or determining the RB set of the cell according to the position of the at least one carrier in the frequency configuration information of the cell.

The CU further provides the DU of the IAB node with resource attribute configuration of the RB set of the DU cell. If one IAB node has the child node, the CU further provides the IAB node with resource attribute configuration of the RB set of the DU cell of the child node. The indication granularity of the resource attribute of the RB set in the time domain is the symbol direction in the slot, and the granularity in the frequency domain is the RB set. The resource attribute includes at least one of the following: hard (H), soft (S), or unavailable (or not available) (NA). For the DU cell, hard resources refer to resources that the DU cell can use; and unavailable resources refer to resources that the DU cell cannot use. Soft resources refer to resources that can be used by the DU cell if a condition is satisfied. For example, a parent node (that is, the parent node of the IAB node, where the parent node may be another IAB node or a donor node, that is, an IAB-donor) may indicate the availability of soft resources of the DU cell of the child node (that is, the IAB node). If the parent node indicates to the child node that one or some soft resources of the DU cell of the child node are available, the DU cell may use the soft resources. Alternatively, if the DU cell implicitly determines that the use of one or some soft resources does not affect the reception or transmission of the MT of the IAB node (the MT and the DU belong to the same IAB node), the DU may use the soft resources. By configuring resource attributes for the resources of the DU cell, resource conflicts between links can be better avoided. For example, resource conflicts between a parent link and a child link of the IAB node are avoided, where the parent link refers to a link between the IAB node and the parent node, and the child link refers to a link between the IAB node and the child node.

The IAB node does not expect one RB of the DU cell to span two RB sets. For example, the first six subcarriers of the RB belong to RB set n, and the last six subcarriers belong to RB set n+1. The IAB node does not expect one RB of the DU cell to correspond to more than one resource attribute. For example, the first six subcarriers of the RB are hard resources, and the last six subcarriers are soft resources or unavailable resources.

In this manner, the communication node can determine the RB set based on the resource configuration information, thereby avoiding resource conflicts, reducing the communication delay, and improving the communication efficiency.

FIG. 8 is a diagram illustrating the structure of an RB set determination apparatus according to an embodiment. The apparatus may be configured in a communication node. As shown in FIG. 8, the apparatus includes a determination module 200.

The determination module 200 is configured to determine resource configuration information, where the resource configuration information includes at least one of the position of a reference RB or the position of at least one carrier; determine a start frequency position according to the resource configuration information; and determine an RB set according to the start frequency position.

The RB set determination apparatus provided in this embodiment may implement the RB set determination method in the preceding embodiments. The RB set determination apparatus provided in this embodiment has implementation principles and technical effects that are similar to those of the preceding embodiments, and the details are not repeated here.

In an embodiment, the resource configuration information includes the position of the at least one carrier; and the determination module 200 is configured to determine the lowest frequency position of the at least one carrier according to the position of the at least one carrier and use the position of a CRB overlapping the lowest frequency position of the at least one carrier as the start frequency position, or use the position of the lowest subcarrier of the CRB overlapping the lowest frequency position of the at least one carrier as the start frequency position, or use the position of a CRB with the minimum index overlapping the lowest frequency position of the at least one carrier as the start frequency position, or use the position of the lowest subcarrier of the CRB with the minimum index overlapping the lowest frequency position of the at least one carrier as the start frequency position.

In an embodiment, the SCS corresponding to the CRB is the SCS corresponding to the RB set, or the maximum value of the SCSs of carriers in the at least one carrier, or the SCS configured by the CU, or the predefined SCS.

In an embodiment, the resource configuration information includes the position of the reference RB; and the determination module 200 is configured to use the position of the reference RB as the start frequency position or use the position of the lowest subcarrier of the reference RB as the start frequency position.

In an embodiment, the resource configuration information includes the position of the at least one carrier; and the determination module 200 is configured to determine a target frequency position according to the position of the at least one carrier and use the target frequency position as the start frequency position.

In an embodiment, the target frequency position is the lowest frequency position of the at least one carrier, or the lowest frequency position of a carrier with the maximum SCS among the at least one carrier, or the lowest frequency position of a carrier with the maximum bandwidth among the at least one carrier, or the lowest frequency position of a carrier with the same SCS as an SCS corresponding to the RB set among the at least one carrier.

In an embodiment, the lowest frequency position of the at least one carrier is the lowest frequency position of a union of the at least one carrier, or the position of a start RB of a carrier with the lowest start frequency among the at least one carrier, or the position of the lowest subcarrier of the start RB of the carrier with the lowest start frequency among the at least one carrier.

In an embodiment, N RB sets are continuous and non-overlapping in the frequency domain, the start position of the first RB set starts from the start frequency position, each RB set includes S RBs, and the SCS corresponding to the RB set is X.

In an embodiment, N, S, and X are determined according to the number of RB sets in the RB set configuration parameter, the number of RBs included in one RB set, and the SCS, respectively.

In an embodiment, at least one RB set is continuous and non-overlapping, and the start position of the first RB set starts from the start frequency position. The number of RB sets, the number of RBs included in the RB set, and the SCSs corresponding to the RB sets are indicated by a higher-level entity.

In an embodiment, if all the RB sets do not cover the entire carrier, the remaining RBs or remaining frequency resources are included in a designated RB set.

In an embodiment, the entire carrier includes at least one of the following: a carrier formed by a union of the at least one carrier; a carrier of the at least one carrier; a carrier with the minimum bandwidth of a union including the at least one carrier; or a carrier with the position of the reference RB as a start position and the highest frequency of a union of the at least one carrier as an end position.

In an embodiment, the resource configuration information corresponds to a given direction in a cell; the cell includes at least one of the following: a DU cell of a communication node, a DU cell of a child node of the communication node, a cell for which the communication node provides a service, or a cell for which the child node of the communication node provides a service; and the given direction includes at least one of the following: the uplink of an FDD cell, the downlink of the FDD cell, the uplink and the downlink of a TDD cell, or a supplementary uplink carrier.

An embodiment of the present application further provides a communication node. The communication node includes a processor configured to perform the method provided in any embodiment of the present application when executing a computer program. Specifically, the communication node may be an access network device provided in any embodiment of the present application, which is not specifically limited in the present application.

For example, the following embodiment provides a diagram illustrating the structure of an IAB node as a communication node.

FIG. 9 is a diagram illustrating the structure of an IAB node according to an embodiment. As shown in FIG. 9, the IAB node includes a processor 60, a memory 61, and a communication interface 62. One or more processors 60 may be provided in the IAB node, and one processor 60 is used as an example in FIG. 9. The processor 60, the memory 61, and the communication interface 62 that are in the IAB node may be connected through a bus or in other manners. In FIG. 9, the connection through the bus is used as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the method of the embodiments of the present application. The processor 60 executes software programs, instructions, and modules stored in the memory 61 to perform at least one function application and data processing of the base station, that is, to perform the preceding method.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a nonvolatile memory such as at least one magnetic disk memory, a flash memory, or another nonvolatile solid-state memory. In some examples, the memory 61 may include memories that are remotely disposed with respect to the processor 60. These remote memories may be connected to the base station via a network. Examples of the preceding network include, but are not limited to, the Internet, an intranet, a network, a mobile communication network, and a combination thereof.

The communication interface 62 may be configured to receive and send data.

An embodiment of the present application further provides a computer-readable storage medium. The computer-readable storage medium is configured to store a computer program which, when executed by a processor, causes the processor to perform the method provided in any embodiment of the present application.

A computer storage medium in the embodiment of the present application may be one computer-readable medium or any combination of multiple computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory, or any suitable combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, radio frequency (RF) and the like, or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby, and Go) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case relating to the remote computer, the remote computer may be connected to the user computer via any type of network (including a local area network (LAN) or a wide area network (WAN)) or may be connected to an external computer (for example, via the Internet through an Internet service provider).

It is to be understood by those skilled in the art that the term "user equipment" encompasses any suitable type of radio user device such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. The data processor may be of any type suitable for the local technical environment, for example, but is not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A resource block set, RB set, determination method, comprising:
determining resource configuration information, wherein the resource configuration information comprises at least one of a position of a reference resource block, RB, or a position of at least one carrier;
determining a start frequency position according to the resource configuration information; and
determining an RB set according to the start frequency position.

2. The method of claim 1, wherein the resource configuration information comprises the position of the at least one carrier; and determining the start frequency position according to the resource configuration information comprises:
determining a lowest frequency position of the at least one carrier according to the position of the at least one carrier; and
using a position of a Common Resource Block, CRB, overlapping the lowest frequency position of the at least one carrier as the start frequency position; or using a position of a lowest subcarrier of the CRB overlapping the lowest frequency position of the at least one carrier as the start frequency position; or using a position of a CRB with a minimum index overlapping the lowest frequency position of the at least one carrier as the start frequency position; or using a position of a lowest subcarrier of the CRB with the minimum index overlapping the lowest frequency position of the at least one carrier as the start frequency position.

3. The method of claim 2, wherein a subcarrier spacing, SCS, corresponding to the CRB is an SCS corresponding to the RB set, or a maximum value of SCSs of carriers in the at least one carrier, or an SCS configured by a Centralized Unit, CU, or a predefined SCS.

4. The method of claim 1, wherein the resource configuration information comprises the position of the reference RB; and the determining the start frequency position according to the resource configuration information comprises:
using the position of the reference RB as the start frequency position; or using a position of a lowest subcarrier of the reference RB as the start frequency position.

5. The method of claim 1, wherein the resource configuration information comprises the position of the at least one carrier; and the determining the start frequency position according to the resource configuration information comprises:
determining a target frequency position according to the position of the at least one carrier; and
using the target frequency position as the start frequency position.

6. The method of claim 5, wherein the target frequency position is a lowest frequency position of the at least one carrier, or a lowest frequency position of a carrier with a maximum SCS among the at least one carrier, or a lowest frequency position of a carrier with a maximum bandwidth among the at least one carrier, or a lowest frequency position of a carrier with a same SCS as an SCS corresponding to the RB set among the at least one carrier.

7. The method of claim 2 or 6, wherein the lowest frequency position of the at least one carrier is a lowest frequency position of a union of the at least one carrier, or a position of a start RB of a carrier with a lowest start frequency among the at least one carrier, or a position of a lowest subcarrier of the start RB of the carrier with the lowest start frequency among the at least one carrier.

8. The method of claim 1, wherein N RB sets are continuous and non-overlapping in a frequency domain, a start position of a first one of the N RB sets starts from the start frequency position, each of the N RB sets comprises S RBs, and an SCS corresponding to the RB set is X.

9. The method of claim 8, wherein N, S, and X are determined according to a number of RB sets in an RB set configuration parameter, a number of RBs comprised in an RB set of the N RB sets, and the SCS, respectively.

10. The method of claim 8, wherein if all the N RB sets do not cover an entire carrier, remaining RBs or remaining frequency resources are comprised in a designated RB set.

11. The method of claim 10, wherein the entire carrier comprises at least one of the following:
a carrier formed by a union of the at least one carrier;
a carrier of the at least one carrier;
a carrier with a minimum bandwidth of a union comprising the at least one carrier; or
a carrier with the position of the reference RB as a start position and a highest frequency of a union of the at least one carrier as an end position.

12. The method of claim 1, wherein the resource configuration information corresponds to a given direction in a cell;
wherein the cell comprises at least one of the following: a Distributed Unit, DU, cell of a communication node, a DU cell of a child node of the communication node, a cell for which the communication node provides a service, or a cell for which the child node of the communication node provides a service; and
the given direction comprises at least one of the following: an uplink of a frequency-division duplexing, FDD, cell, a downlink of the FDD cell, an uplink and a downlink of a time-division duplexing, TDD, cell, or a supplementary uplink carrier.

13. A communication node comprising a processor configured to perform the resource block set, RB set, determination method of any one of claims 1 to 12 when executing a computer program.

14. A computer-readable storage medium, which is configured to store a computer program which, when executed by a processor, causes the processor to perform the resource block set, RB set, determination method of any one of claims 1 to 12.
